# EUROPÄISCHE PATENTSCHRIFT

(11) **EP 0 690 257 B1**
(45) Veröffentlichungstag und Bekanntmachung des Hinweises auf die Patenterteilung: **27.09.2000**
(21) Anmeldenummer: 95108375.7
(22) Anmeldetag: 01.06.1995
(51) Int. Cl.: F16L 37/092, F16L 21/08

(54) **Verfahren zur Herstellung einer zugfesten Rohrverbindung**
Method of manufacturing of a tension-resistant pipe connection
Procédé de fabrication d'une connexion de tuyaux résistante à la tension

(30) Priorität: 28.06.1994 DE 4422564; 31.08.1994 DE 4430858
(43) Veröffentlichungstag der Anmeldung: 03.01.1996
(73) Patentinhaber: REINERT. RITZ GmbH, D-48531 Nordhorn (DE)
(72) Erfinder: Reinert, Karl Albert, D-48527 Nordhorn (DE); Osenberg, Frank, D-48527 Nordhorn (DE); Vorbeck, Manfred, D-63846 Laufach (DE); Dahlemann, Horst, D-63739 Aschaffenburg (DE)
(74) Vertreter: Patentanwälte Ostriga & Sonnet

(56) Entgegenhaltungen:
- EP-A- 0 113 527
- EP-A- 0 141 276
- EP-A- 0 579 194
- EP-A- 0 588 596
- CH-A- 389 342
- DE-A- 3 736 587
- DE-A- 4 002 057
- GB-A- 1 464 743
- US-A- 2 635 901
- US-A- 3 130 987
- US-A- 4 685 708

## Beschreibung

Die Erfindung bezieht sich auf ein Verfahren zur Herstellung einer zug-festen Rohrverbindung nach dem Oberbegriff des Anspruchs 1.

Bei einem Verfahren zur Herstellung einer zugfesten Rohrverbindung beispielsweise der in DE 37 36 587 A1 beschriebenen Art, von der die Erfindung ausgeht, wird der Sicherungsring in Form eines Sprengrings bei axialer Zugbelastung der Rohrverbindung infolge der konischen Umfangs-Kontaktflächen durchmesserverringernd gegen den Außenmantel des Rohres verspannt und dadurch die Rohrverbindung daran gehindert ist, sich unbeabsichtigt zu trennen. Verwendet man jedoch Rohre aus insbesondere weichen Kunststoffen, können deren Oberflächen bereits bei der Montage der Rohrverbindung leicht beschädigt werden, was zu schwerwiegenden Dichtigkeitsverlusten der Rohrverbindung führen kann.

EP-A-0 579 194 offenbart ein Verfahren zur Herstellung einer zugfesten Rohrverbindung nach der Präambel des Anspruchs 1.

Der vorliegenden Erfindung liegt demzufolge die Aufgabe zugrunde, ein Verfahren zur Herstellung einer zugfesten Rohrverbindung der vorausgesetzten Art so weiterzubilden, daß ihre Montage ohne Beschädigung des Rohres vonstatten gehen kann.

Die Erfindung löst diese Aufgabe in Verbindung mit den Merkmalen des Oberbegriffs des Anspruch 1 mit dessen kennzeichnenden Merkmalen.

Die Ausbildung des Sicherungsrings als Spreizklemmring gewährleistet in Verbindung mit seiner Ausgestaltung zum Angriff des Spreizwerkzeugs und für den Ansatz des Montagehilfskörpers, daß das Rohr bei der Montage der Rohrverbindung berührungslos durch den - aufgeweiteten - Sicherungsring hindurchgeschoben werden kann. Damit wird auf recht einfache Art und Weise jede beim Stand der Technik noch mögliche gravierende Beschädigung des Rohres beim axialen Zusammenstecken von Rohr und Sicherungsring absolut sicher vermieden.

Bei einer besonderen Ausführung bildet der Montagehilfskörper selbst das Spreizwerkzeug aus und ist so auf den Sicherungsring und das Rohr abgestimmt, daß das Rohr den Montagehilfsring aufweitet und dieser dabei den Sicherungsring, so daß auch hier das Rohr in die Muffe eingeschoben werden kann, ohne den Sicherungsring zu berühren.

Weitere vorteilhafte und zweckmäßige Ausgestaltungen des Verfahrens zur Herstellung dieser Rohrverbindung sind in den diesbezüglichen abhängigen Ansprüchen angegeben.

Unter bestimmten praktischen Bedingungen kann es vorkommen, daß der Sicherungsring die bei Zugbelastung der Rohrverbindung eingeleiteten radialen Spannkräfte nicht immer optimal wirksam auf den Sicherungsring überträgt, was mit der vorgegebenen, relativ großen Neigung der Innenumfangsfläche der Muffennut zur Längsachse des Systems zusammenhängen mag.

Es besteht deshalb auch die Aufgabe, weitere Ausgestaltungen und zweckmäßige Weiterbildungen der Erfindung anzugeben, die eine noch weiter verbesserte Spannwirkung des Sicherungsrings bei allen im üblichen Betrieb auftretenden Belastungen garantiert.
- Fig. 1: einen Längsschnitt durch eine Rohrverbindung eines ersten Beispiels wobei die untere Hälfte eine Vormontageposition und die obere Hälfte die vollzogene Verbindung zeigt,
- Fig. 2: eine Stirnansicht zu Fig. 1 in Richtung des dortigen Ansichtspfeils II,
- Fig. 3: den Spreizklemmring halb in Ansicht, halb im Schnitt gemäß der Linie III-III der Fig. 4,
- Fig. 4: eine Ansicht des Sicherungsrings,
- Fig. 5: den als Ring ausgeführten Montagehilfskörper, halb in Ansicht, halb im Schnitt entlang der Schnittlinie V-V in Fig. 6,
- Fig. 6: eine Ansicht des Montagehilfskörpers,
- Fig. 7: eine schematische Darstellung der Anbringung des Montagehilfsrings am Sicherungsring, und
- Fig. 8 bis 13: schematische Darstellungen zur Erläuterung der einzelnen Arbeitsschritte, die bei der Herstellung einer Rohrverbindung vorzunehmen sind.
- Fig. 14: einen Längsschnitt durch eine Rohrverbindung nach einem zweiten Beispiel in einer Vormontageposition,
- Fig. 14a: eine der Fig. 14 genau entsprechende Darstellung zur Kenntlichmachung einer besonderen Einzelheit,
- Fig. 15: eine entsprechende Darstellung der vollzogenen Verbindung,
- Fig. 16: die in Fig. 14a markierte Einzelheit XIV in vergrößerter Darstellung,
- Fig. 17: eine erheblich vergrößerte Wiedergabe des Querschnitts des Hilfsrings, und
- Fig. 18: eine entsprechend vergrößerte Querschnittsdarstellung des Sicherungsrings.
- Fig. 19: den Montagehilfskörper des dritten Beispiels, halb in Ansicht, halb im Schnitt entlang der Schnittlinie A-A in Fig. 20,
- Fig. 20: eine Ansicht des Montagehilfskörpers nach Fig. 19,
- Fig. 21 bis 23: einzelne Stadien des Zusammenbaus der Einzelteile bei dem dritten Beispiel, und
- Fig. 24 bis 26: die wesentlichen Stationen beim Einfügen des anzuschließenden Rohres bis zu dessen endgültiger Lage in der Muffe.

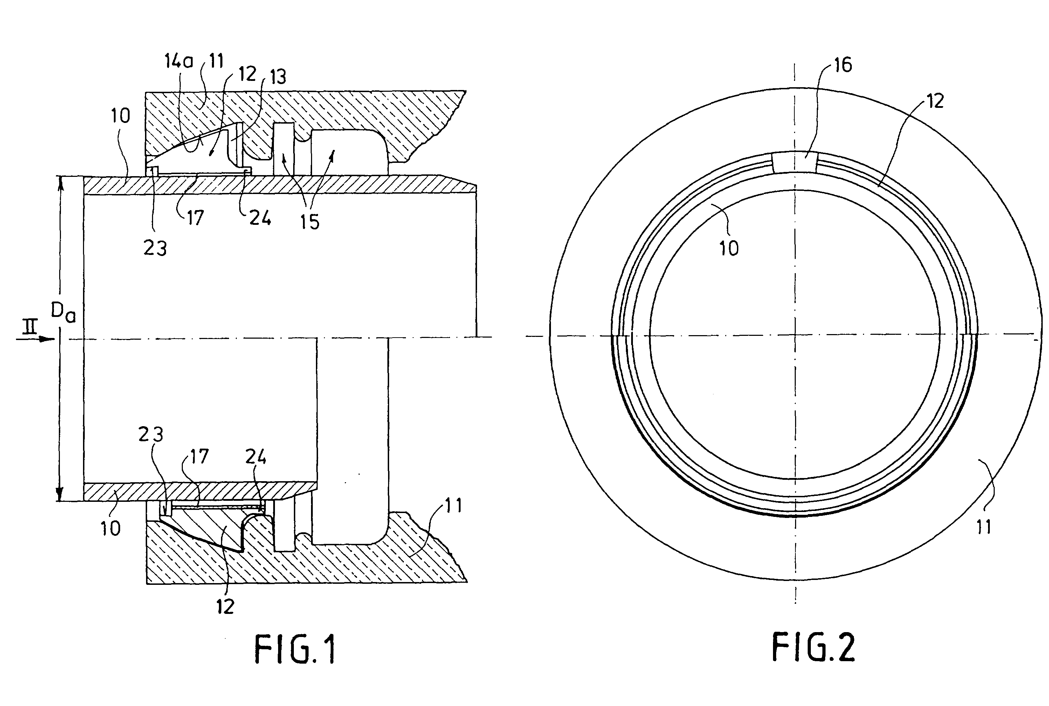

Das erste Beispiel zeigt entsprechend Fig. 1 ein Rohrstück 10 aus einem relativ weichen Kunststoff, wie insbesondere Polyethylen (PE), Polypropylen (PP), Polyvinylchlorid (PVC) od. dgl., eine Rohrmuffe 11 aus Kunststoff oder Metall sowie einen zwischen Rohr 10 und Muffe 11 befindlichen Sicherungsring 12. Bei dem Rohrstück 10 kann es sich um einen Endabschnitt eines längeren Rohres oder auch nur um ein Rohrübergangsstück handeln, welches, etwa mittels Schweißen oder Kleben, mit einem längeren Rohr verbunden ist bzw. wird.

Zur Aufnahme des vorzugsweise aus einem zähelastischen Werkstoff, wie z.B. Polyamid, bestehenden Sicherungsrings 12 in der Muffe 11 weist diese eine Innenumfangsnut 13 auf, die ersichtlich einen konischen bzw. keilförmigen Querschnitt aufweist, dadurch, daß die Kontaktfläche 14 für den Sicherungsring zur Muffenmündung hin gegen das Rohr konvergiert. Eine mit 15 bezeichnete weitere Nutanordnung dient der Aufnahme eines nicht dargestellten Dichtrings.

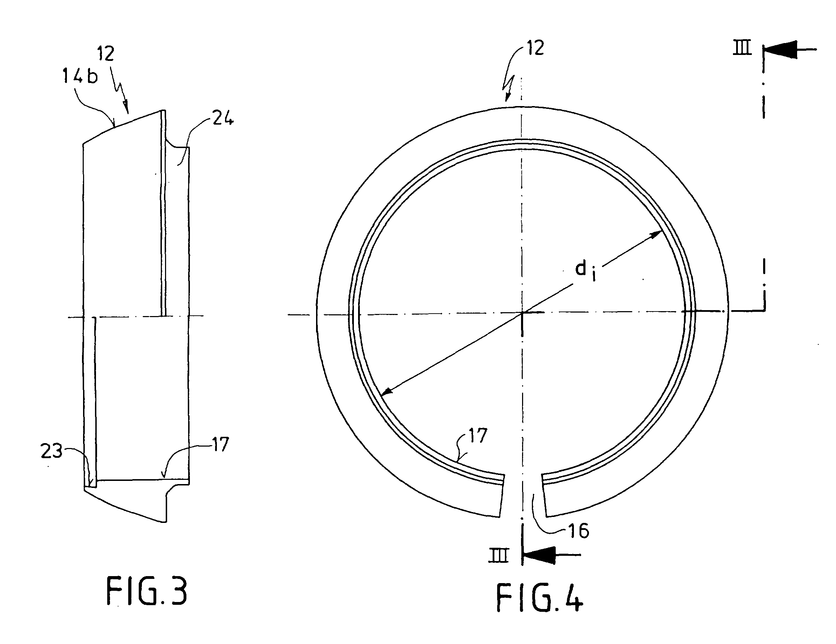

Der elastisch verformbare Sicherungsring 12 weist an einer Umfangsstelle einen Schlitz 16 auf, woraus seine Eigenschaft als Spreizklemmring resultiert. Die Schlitzweite ist mindestens so groß, daß der Sicherungsring 12 unter Verringerung seines Durchmessers soweit zusammengedrückt werden kann, daß er von der Mündungsseite der Muffe 11 her in die dortige Aufnahmenut 13 eingeführt werden kann. Der Innendurchmesser dᵢ (Fig. 4) des entspannten Sicherungsrings 12 ist deutlich kleiner als der Außendurchmesser Dₐ (Fig. 1) des Rohres 10, mit dem er zusammenwirken soll, weshalb der Sicherungsring 12 stets unter kraftschlüssiger radialer Vorspannung am Rohrmantel angreifen kann.

Bevor man die Rohrverbindung durch Einstecken des Rohres 10 in die mit einem Sicherungsring 12 bestückte Muffe 11 herstellt, wird der Sicherungsring 12 durchmesservergrößernd aufgeweitet. So kann, wie die untere Hälfte der Fig. 1 dies veranschaulicht, das Rohr 10 eingeführt und durch den aufgeweitet gehaltenen Sicherungsring 12 berührungslos hindurchgesteckt werden, bis die Endposition etwa entsprechend der oberen Hälfte von Fig. 1 erreicht ist. Sodann kann der Sicherungsring 12 gegen den Mantel des Rohres 10 zurückfedern, womit bereits eine beachtliche Klemmkraft aufgebracht werden kann. Am Innenumfang weist der Sicherungsring 12 haftreibungserhöhende Mittel 17 auf, z.B. einen Belag aus Korund, zahnartige Vorsprünge oder Einlagerungen. Beim Versuch, Rohr 10 und Muffe 11 axial auseinanderzuziehen, bewirken die schrägen Kontaktflächen 14a/14b von Ringnut 13 und Sicherungsring 12 eine mit zunehmendem Axialzug ansteigende Erhöhung der Klemmkraft des Sicherungsrings 12 auf den Mantel des Rohres 10. Im übrigen ist die Anlagefläche des Sicherungsrings 12 auf dem Rohr 10 in Axialrichtung der Rohrverbindung dadurch verlängert, daß der Sicherungsring 12 einen verlängerten Abschnitt 24 aufweist, der sich aus der Aufnahmenut 13 heraus noch ein Stück zum Muffengrund hin erstreckt.

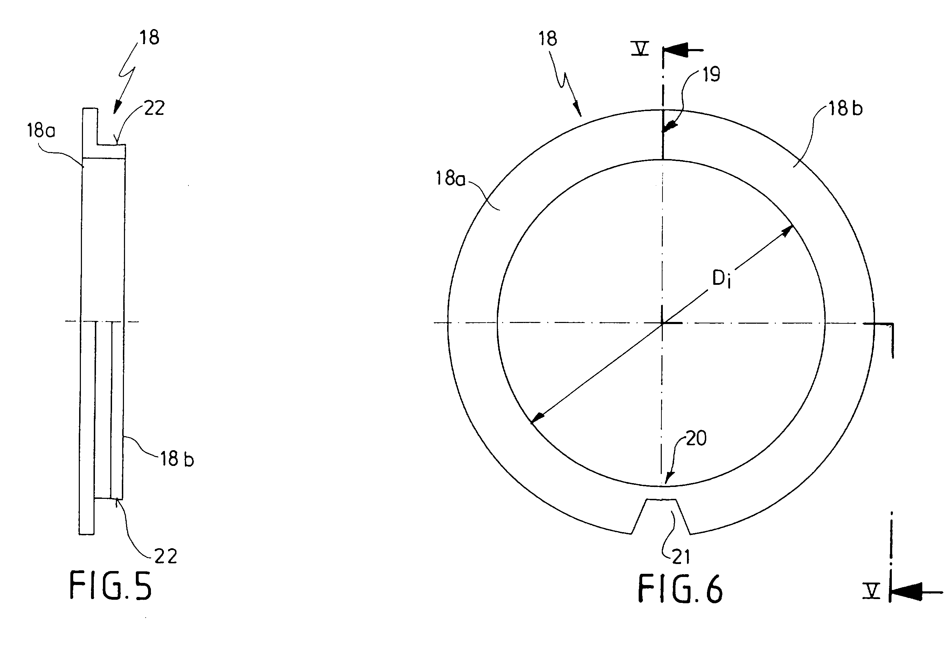

Zur erheblichen Erleichterung der Herstellung der Rohrverbindung ist ein Montagehilfsring 18 vorgesehen. Er ist besonders in den Fig. 5 und 6 dargestellt und besteht aus einem ringförmigen Spritzgießbauteil aus zähelastischem Kunststoff wie etwa Polyamid. Auch der Montagehilfsring 18 weist beim Ausführungsbeispiel an einer Umfangsstelle einen Schlitz 19 auf, der hier die Funktion hat, den Montagehilfsring 18 in zwei Teile 18a und 18b zu unterteilen, die über ein an anderer Umfangsstelle angeordnetes Gelenk 20 zusammengehalten und folglich um die Achse dieses Gelenks relativ zueinander verschwenkt werden können, der Montagehilfsring 18 also geöffnet und auch wieder geschlossen werden kann.

Bei dem ersten Beispiel ist das Gelenk 20 mit dem Montagehilfsring 18 werkstoffeinheitlich-stoffschlüssig und also gelenkachslos ausgebildet, wozu mittels einer Umfangsausnehmung 21 eine das Gelenk 20 definierende Werkstoffschwächungszone ausgebildet ist, so daß das Gelenk 20 etwa mit einem Filmscharnier vergleichbar ist. Wesentlich ist es, daß sich der Montagehilfsring 18 durch Auseinanderschwenken seiner Ringteile 18a und 18b soweit öffnen läßt, daß er radial zum Rohr 10 aufgebracht bzw. von ihm abgenommen werden kann.

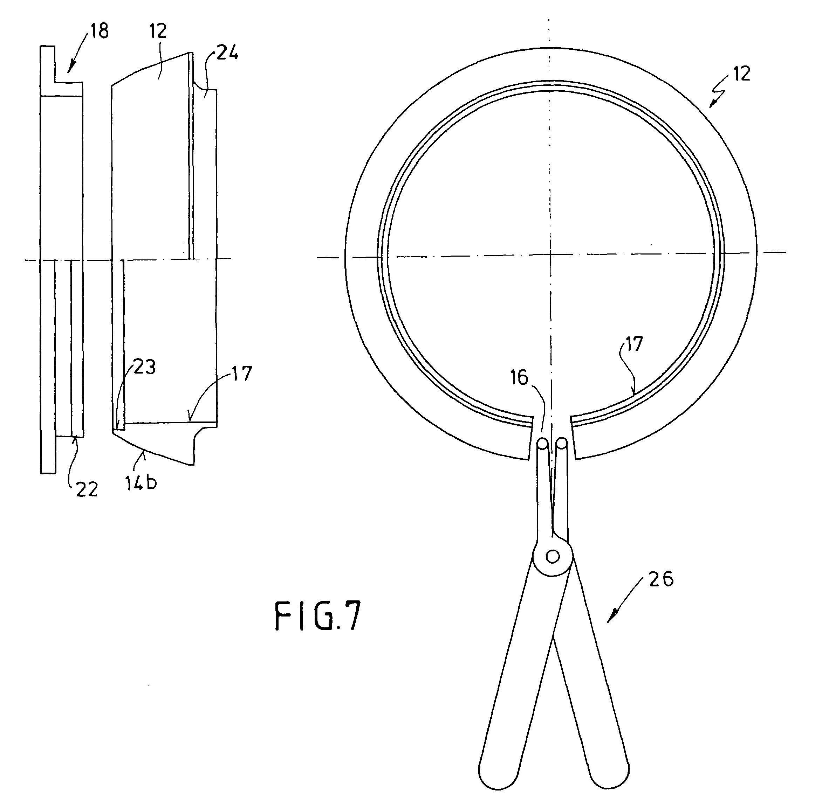

Der Innendurchmesser Dᵢ des bei geschlossenem Schlitz 19 entspannten Montagehilfsrings 18 ist zumindest geringfügig größer als der Außendurchmesser Dₐ des Rohrstücks 10, damit letzteres ohne weiteres durch den Montagehilfsring hindurchgeschoben werden kann. Zum zentrierenden Zusammenwirken mit dem Sicherungsring 12 weist der Montagehilfsring 18 eine abgesetzte Umfangseindrehung 22 auf, die dazu bestimmt ist, den z.B. mittels einer Spreizzange 26 (Fig. 7) innerhalb der Muffe 11 aufgeweiteten Sicherungsring 12 zu fassen und ihn sodann aufgeweitet zu halten. Der Sicherungsring 12 weist an seiner muffenmündungsseitigen Stirn eine passend abgesetzte Innen-Umfangseindrehung 23 auf. Um zusätzlich zu einem Formschluß noch einen gewissen haltsichernden Rastschluß der vorübergehenden Verbindung zu erzielen, sind, wie in Fig. 7 verdeutlicht, die Ringflächen leicht konisch geformt, so daß sie eine geringfügig hinterschnittene Rastung ausbilden.

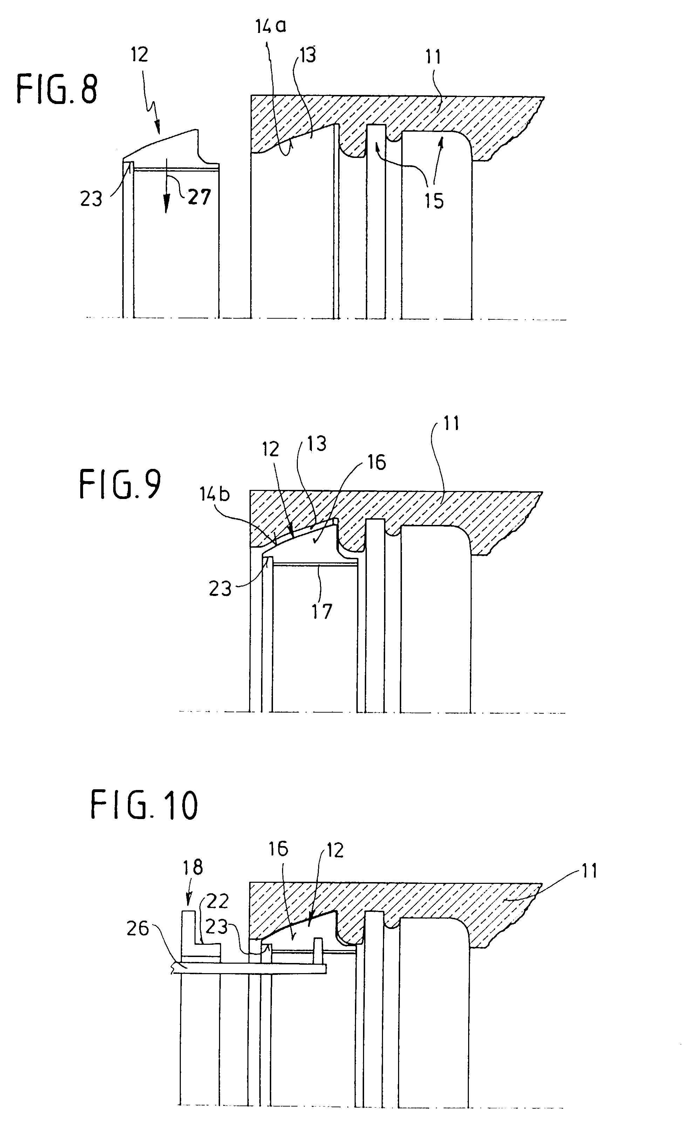

Nachdem die wesentlichen Bauteile der Rohrverbindung und ihre beispielhafte Gestaltung beschrieben sind, verstehen sich die zur Herstellung einer Rohrverbindung erforderlichen Maßnahmen und Handhabungen am besten anhand der Figuren 8 bis 13, und zwar wie folgt:

Um einen geschlitzten Sicherungsring 12 in die dazu bestimmte Aufnahmenut 13 einer Muffe 11 einzusetzen, wird er unter Verringerung seiner Schlitzweite radial zusammengedrückt (mit dem Pfeil 27 in Fig. 8 angedeutet), so daß er in die Muffenmündung hineinpaßt und ordnungsgemäß in der Muffennut 13 untergebracht werden kann (Fig. 9).

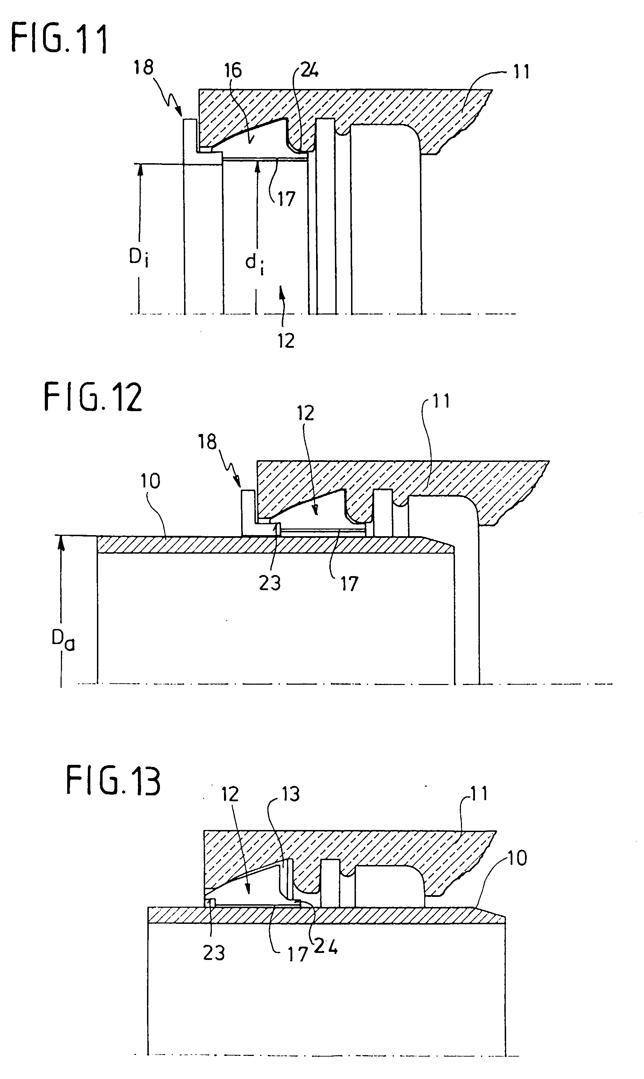

Nun wird der Sicherungsring 12 mit einem z.B. zangenartigen Spreizwerkzeug 26 durchmesservergrößernd aufgeweitet, wozu es am einfachsten ist, das Spreizwerkzeug 26 an den den Schlitz 16 begrenzenden Flächen anzusetzen, vgl. Fig. 10. Wie aus dieser Darstellung weiterhin ersichtlich ist, durchgreift das Spreizwerkzeug 26 bereits den bereitgehaltenen Montagehilfsring 18, der nun mit dem vom Spreizwerkzeug 26 aufgeweitet gehaltenen Sicherungsring 12 steckverbunden wird. Dies ist in Fig. 11 dargestellt; das Spreizwerkzeug 26 ist bereits entfernt.

Erkennbar ist auch, daß der Innendurchmesser Dᵢ des Montagehilfsrings 18 kleiner ist als der Innendurchmesser d_{I} des Sicherungsrings 12 in seiner gegenwärtig aufgeweiteten Form. Außerdem ist der Innendurchmesser Dᵢ des Montagehilfsrings 18 mindestens geringfügig größer als der Außendurchmesser Dₐ des Rohres 10.

Nun kann also das Rohr 10 sowohl durch den Montagehilfsring 18 als auch durch den Sicherungsring 12 hindurch berührungsfrei bis zur Endlage in die Muffe 11 eingeschoben werden, was mit Fig. 12 veranschaulicht werden soll. Schließlich wird der Montagehilfsring 18 axial längs des Rohres 10 vom Sicherungsring 12 abgezogen, der sodann gegen den Rohrmantel federt. Zuletzt kann dann noch der Montagehilfsring offengeklappt und radial vom Rohr entfernt werden.

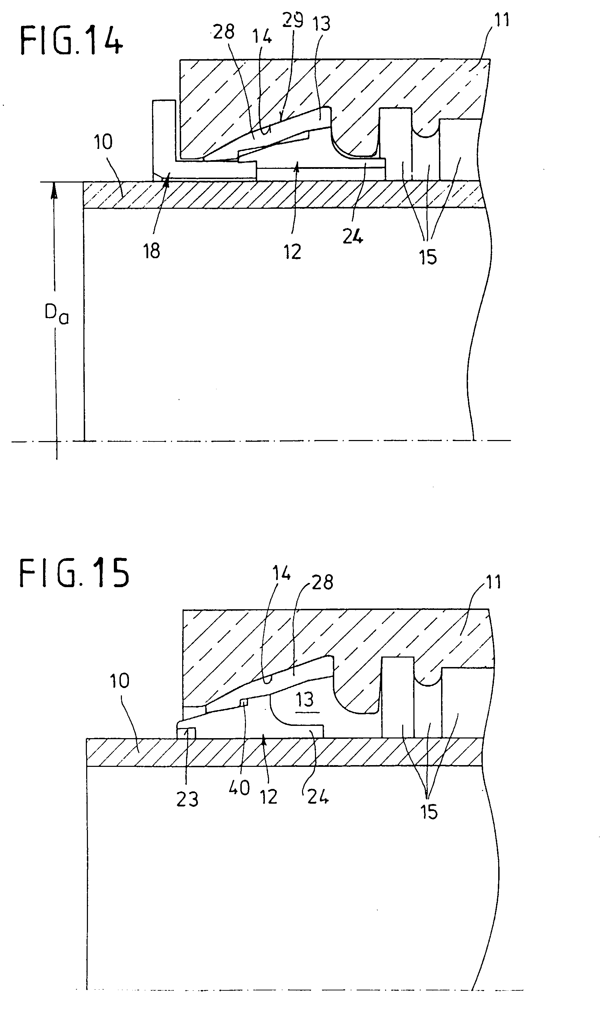

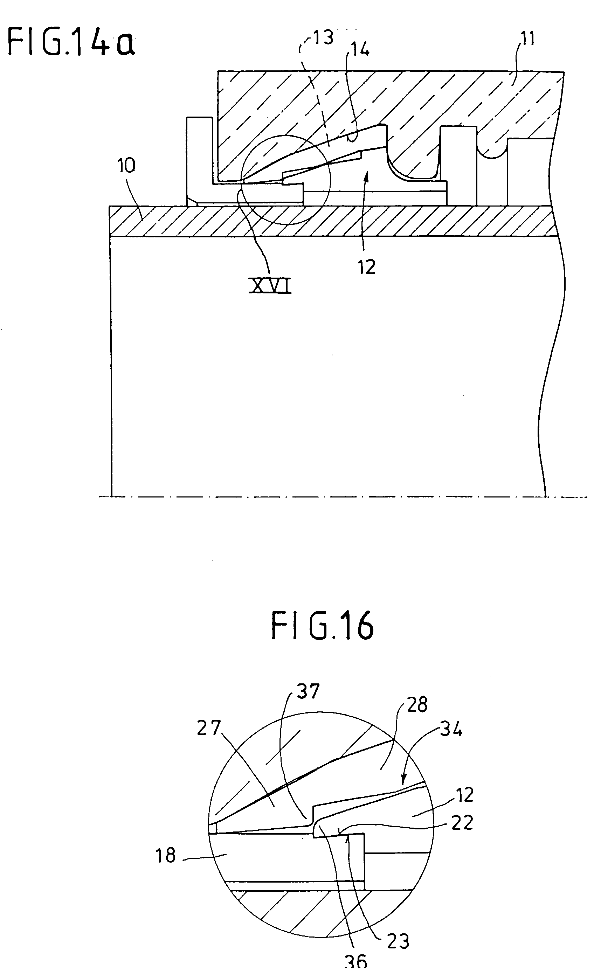

Bei dem in den Figuren 14 bis 18 dargestellten weiteren Beispiel gelangt der Sicherungsring 12 nicht unmittelbar zur Anlage an der Nutinnenfläche 14 in der Muffe 11. Vielmehr ist jetzt ein zusätzlicher Hilfsring 28 vorgesehen, der die Innenumfangsnut 13 der Muffe teilweise auskleidet, und zwar überwiegend im Nuttiefsten. Wie der Sicherungsring 12 ist auch der Hilfsring 28 geschlitzt und besteht vorzugsweise aus demselben Material.

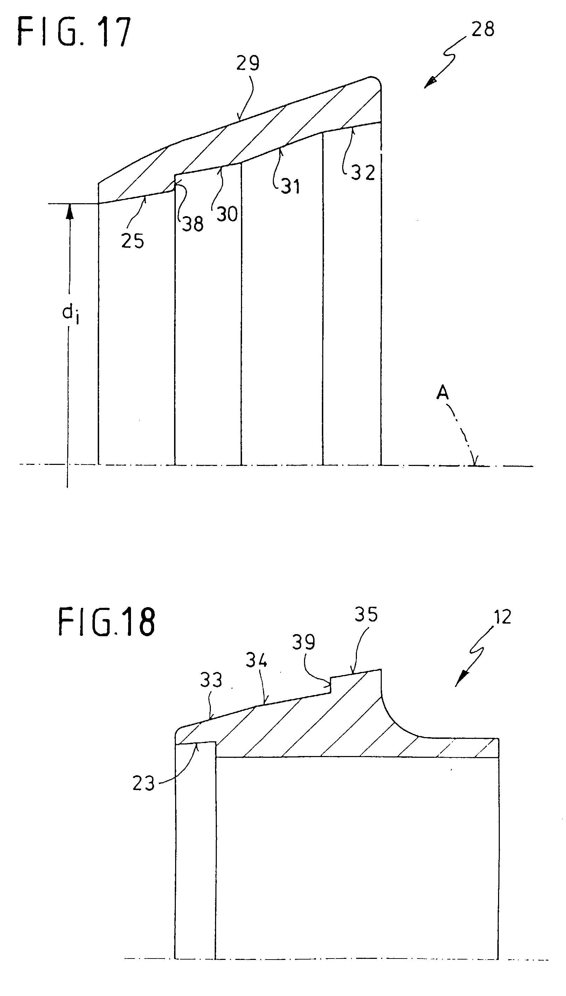

Der erste Schritt zur Herstellung einer Rohrverbindung besteht nunmehr darin, daß man den Hilfsring 28 durchmesserverjüngend spannt und ihn in die Muffennut 13 einbringt, in der er fortan satt einliegt, wobei seine Außenfläche 29 der Innenfläche 14 der Nut 13 recht genau formangepaßt ist. Der Hilfsring 28 weist an seinem muffenmündungsseitigen Ende den geringsten Durchmesser dᵢ (Fig. 17) auf, der zumindest geringfügig kleiner ist als der Innendurchmesser der Muffenmündung, damit der Sicherungsring 12 letztere nicht berühren kann.

Um den geschlitzten Sicherungsring 12 in den bereits in der Aufnahmenut 13 einer Muffe 11 einliegenden Hilfsring 28 einzusetzen, wird er unter Verringerung seiner Schlitzweite radial zusammengedrückt, so daß er durch die Muffenmündung hindurchpaßt und ordnungsgemäß in der Muffennut 13 untergebracht werden kann. Nun wird der Sicherungsring 12 in der bereits oben anhand des ersten Ausführungsbesipiels beschriebenen Art uind Weise durchmesservergrößernd aufgeweitet. Daraufhin kann das Rohr 10 sowohl durch den Montagehilfsring 18 als auch durch den Sicherungsring 12 hindurch berührungsfrei bis zur Endlage in die Muffe 11 eingeschoben werden. Schließlich wird der Montagehilfsring 18 wieder - wie gleichfalls weiter oben erläutert - entfernt.

Während beim ersten Beispiel (entsprechend den Fig. 1 bis 13) der Sicherungsring 12 mit seiner Außenfläche die Innenfläche 14 der muffenseitigen Nut 13 unmittelbar kontaktiert, ist letztere nunmehr mit dem Hilfsring 28 ausgekleidet, dessen Innenfläche jetzt die zum Sicherungsring 12 komplementären Kontaktflächen aufweist.

Bei diesem Beispiel ist - wie Fig. 17 besonders deutlich erkennen läßt - eine mehrstufige Flächenanordnung ausgebildet. Ausgehend vom muffenmündungsseitigen Ende des Hilfsrings 28 sind diese einzelnen Flächen mit 25, 30, 31 und 32 bezeichnet. Ihre Winkel zur Systemlängsachse A betragen etwa 10°, 10°, 20° und 10°. Vor allem die funktionswichtigsten Flächen 25 und 30 weisen also eine deutlich geringere Neigung als die Innenumfangsfläche 14 der Muffennut 13 auf, die etwa 20° beträgt.

Auch die Außenfläche des Sicherungsrings 12 ist in mehrere unterschiedlich geneigte Abschnitte unterteilt. Diese Flächen sind in Fig. 18 mit 33, 34 und 35 bezeichnet. Sie schließen mit der Achse A Winkel von etwa 16°, 10° und 10° ein.

In der Vormontagestellung nach Fig. 14 gelangt bei aufgeweitetem Sicherungsring 12 die Flächenpaarung 32/35 in Kontakt. Gleichzeitig erfolgt eine Linienberührung weiter vorn zum Muffengrund hin - in Fig. 16 mit 34 angedeutet. Dabei ist die Anordnung so getroffen, daß sich das 'Spitzende' 36 des Sicherungsrings 12 nicht hinter der Absatzstufe 37 des Hilfsrings 28 verfangen kann. Der vom Hilfswerkzeug 18 befreite und sich somit an den Rohrmantel anlegende Sicherungsring kann sich also ungehindert nach vorn zur Muffenmündung hin bewegen.

Die Flächenpaarungen 30/34 und 32/35 bilden die kraftübertragenden Kontaktflächen zwischen Hilfsring 28 und Sicherungsring 12 aus. Diese mit axialem Abstand doppelte Abstützung ergibt eine optimale Radialkraftübertragung von der Muffe über den Hilfsring 13 und den Sicherungsring 12 auf das Rohr 10.

Während beim Hilfsring die Fläche 25 gegenüber der Fläche 30 nach innen vorsteht, erhebt sich die Fläche 35 beim Sicherungsring 12 gegenüber der Fläche 34. Folglich sind einander übergreifende, formkomplementäre Absatzstufen geschaffen mit gegeneinander weisenden, teilweise überlappenden Anschlagflächen 38 am Hilfsring 28 und 39 am Sicherungsring 12. Diese Anordnung verhindert zuverlässig, daß der Sicherungsring 12 aus dem Hilfsring 28 und somit aus der Muffe 11 herausgezogen werden könnte. Im übrigen aber ist die Geometrie so ausgelegt, daß unter normalen Betriebsbedingungen zwischen den Flächen 38 und 39 durchaus noch ein, wenn auch kleiner, Freiraum 40 (Fig. 2) verbleiben soll, der gewissen Toleranzausgleichen ebenso Rechnung trägt wie er eine Reserve zur Umsetzung erhöhter Zugkräfte an der Rohrverbindung in radiale Klemmkräfte des Sicherungsrings 12 auf dem Rohrmantel schafft.

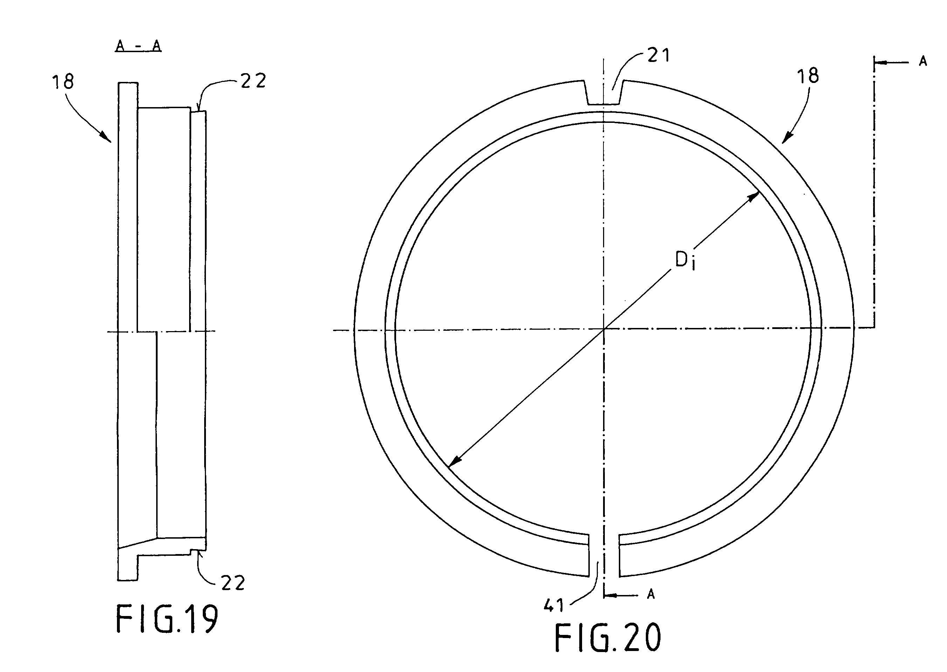

Auch bei dem in den Figuren 19 bis 26 dargestellten dritten Beispiel ist wie bei dem zweiten Beispiel ein Hilfsring 28 vorgesehen. Allerdings könnte auch die beim ersten Beispiel beschriebene Anordnung mit einem Sicherungsring 12 ohne den Hilfsring 28 in Betracht kommen, denn das Wesentliche dieses dritten Beispiels besteht darin, daß hier kein besonderes Spreizwerkzeug, wie etwa die Spreizzange 26 nach Fig. 7 und 10, mehr erforderlich ist, weil der ringförmige Montagehilfskörper 18 selbst, insbesondere in seinem Zusammenwirken mit dem anzuschließenden Rohr 10, als Spreizwerkzeug dient.

Der Montagehilfsring 18, der besonders in den Fig. 19 und 20 dargestellt ist, ist als Spreizring ausgebildet mit einem deutlichen Umfangsschlitz 41, der es erlaubt, daß der Montagehilfsring 18 durchmesserverjüngend verformt werden kann. Die dem Spalt 41 gegenüberliegend angeordnete Werkstoffschwächungszone 21 begünstigt dies wie auch eine Aufweitung des Rings 18. Eine voll aufklappbare Anordnung in zwei Ringhälften wie bei den zuvor beschriebenen Beispielen ist hier jedoch nicht unbedingt vorgesehen. Es kann sehr vorteilhaft sein, mehrere Werkstoffschwächungszonen 21 über den Umfang des Montagehilfsrings 18 verteilt anzuordnen, weil sich dann bei Formänderung des Rings weniger eine elliptische als eine einem Kreis besser angepasste Umfangskontur ergibt.

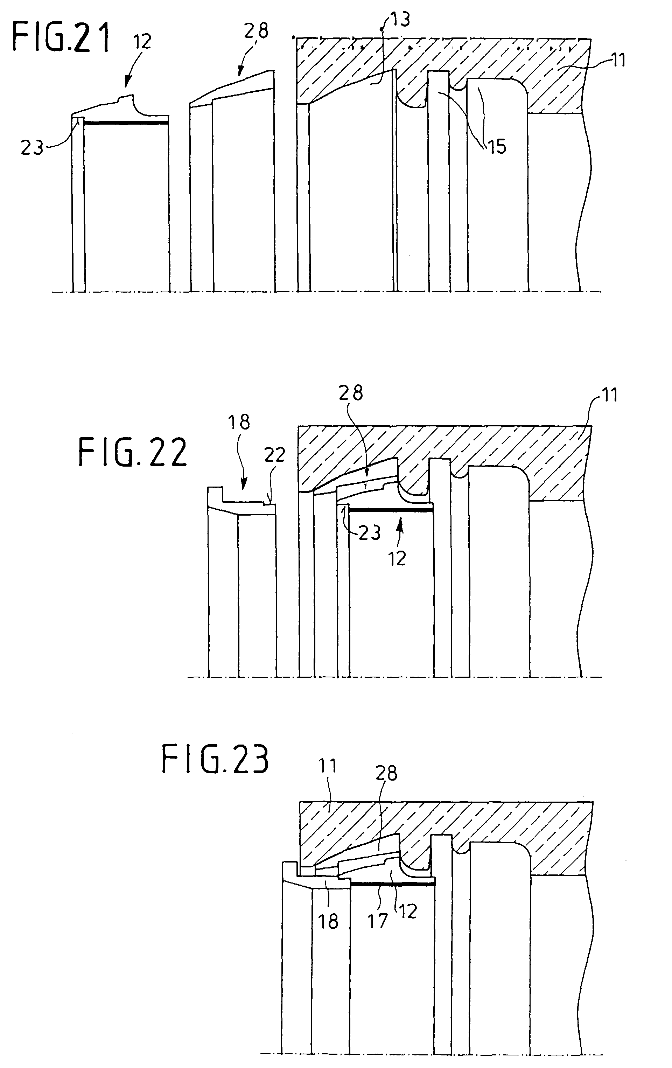

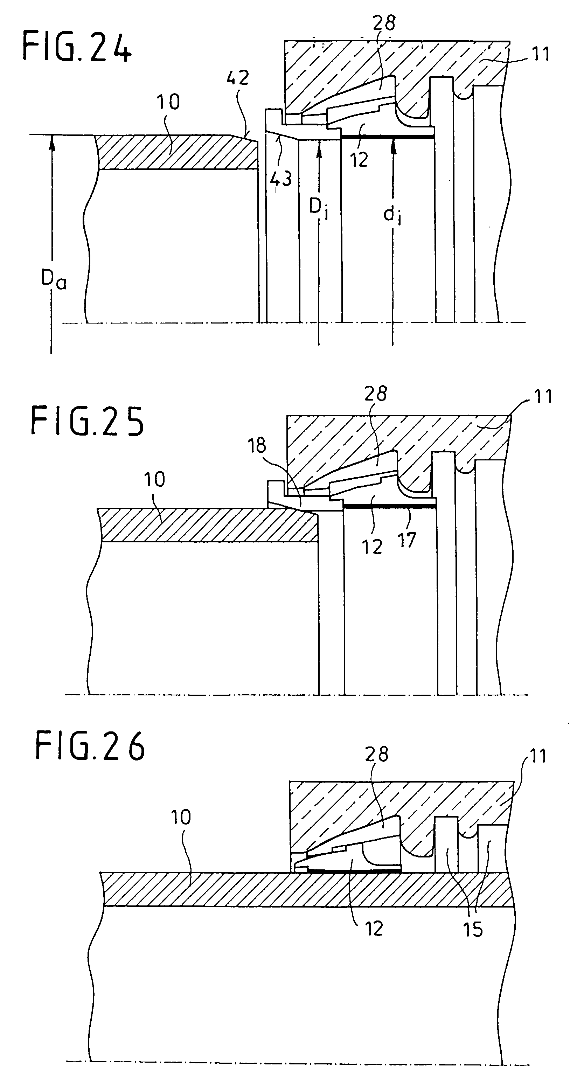

Nachdem zunächst der Hilfsring 28 und der Sicherungsring 12 (Fig. 21) nacheinander in ihre bestimmungsgemäße Position in die Muffe 11 eingebracht worden sind (Fig. 22) wird der Montagehilfsring 18 soweit durchmesserverjüngend verfomt, daß seine abgesetzte Umfangseindrehung 22 mit der Umfangseindrehung 23 an der ihm zugewandten Stirnseite des Sicherungsrings 12 eine formschlüssige Kupplungsverbindung eingehen kann, sobald er sich nach dem Anstecken und Loslassen teilweise wieder entspannt. Diese Verbindung, die noch nicht bezwecken muß, den Sicherungsring 12 nennenswert durchmesservergrößernd aufzuweiten, zeigen die Fig. 23 und 24.

Wie insbesondere aus Fig. 24 ersichtlich ist, weist in dieser Position der Montagehilfsring 18 einen Innendurchmesser Dᵢ auf, der kleiner ist als der Außendurchmesser Dₐ des Rohrstücks 10 und auch kleiner als der Innendurchmesser dᵢ des Sicherungsrings 12.

Das Rohr 10 und der Montagehilfsring 18 weisen jeweils Einführschrägen 42 und 43 auf in Form einer konischen Anfasung am Mantel des Rohr-Spitzendes (42) bzw. in Gestalt einer konischen Innenfase (43) an der dem Rohr zugekehrten Seite des Montagehilfsrings 18. Wird nun das Rohrstück 10 in den Montagehilfsring 18 eingesteckt, weitet das Rohr 10 den Montagehilfsring 18 so lange auf, bis die Außenmantelfläche des Rohres 10 und die Innenmatelfläche des Montagehilfsrings in satte Anlage geraten. Nun läßt sich das Rohr weiter bis in seine bestimmungsgemäße Endposition schieben. Dabei entsteht zwar Reibungskontakt mit dem Montagehilfsring 18, was aber insoweit unschädlich ist, als dieser lediglich aus Kunststoff besteht, jedoch erfolgt keinerlei Berührung des Rohres 10 mit dem Sicherungsring 12, vor allem nicht mit dessen mit einer haftreibungserhöhenden Beschichtung 17, ggf. aus Korund, versehenem Innenmantel.

Wenn die Montage der Rohrverbindung insoweit abgeschlossen ist, zieht man den Montagehilfsring 18 in Rohrlängsrichtung vom Sicherungsring 12 ab und streift ihn schließlich (bezüglich der Fig. nach links) vom Rohrstück 10 ab.

## Patentansprüche

1. Verfahren zur Herstellung einer zugfesten Rohrverbindung mit einem geschlitzten Sicherungsring (12), der durchmesserverjüngend gespannt und von der Mündungsseite der Muffe (11) in deren Innenumfangsnut (13) eingesetzt wird, **gekennzeichnet durch** folgende Schritte:
a. der Sicherungsring (12) wird mittels eines Spreizwerkzeugs (26) durchmesservergrößernd aufgeweitet,
b. an die muffenaußenseite Stirnseite des aufgeweitet gehaltenen Sicherungsrings (12) wird ein Montagehilfskörper (18) angesetzt,
c. das Spreizwerkzeug (26) wird entfernt und der Sicherungsring (12) vom Montagehilfskörper (18) aufgeweitet gehalten,
d. das anzuschließende Rohr (10) und die Muffe (11) werden zusammengesteckt, wobei das Rohr (10) bis zum Erreichen seiner bestimmungsgemäßen Position am Montagehilfskörper (18) vorbei und durch den aufgeweitet gehaltenen Sicherungsring (12) in die Muffe (11) eindringt,
e. der Montagehilfskörper (18) wird vom Sicherungsring (12) abgenommen und vom Rohr (10) entfernt.

2. Verfahren zur Herstellung einer zugfesten Rohrverbindung mit einem geschlitzten Sicherungsring (12), der durchmesserverjüngend gespannt und von der Mündungsseite der Muffe (11) in deren Innenumfangsnut (13) eingesetzt wird, **gekennzeichnet durch** folgende Schritte:
a. an die muffenaußenseite Stirnseite des Sicherungsrings (12) wird ein Montagehilfskörper (18) in Form eines Spreizrings angesetzt,
b. das Ende des Rohres (10) wird in den Montagehilfskörper (18) eingeführt, wobei das Rohr (10) den Montagehilfskörper (18) und dieser den Sicherungsring (12) aufweitet,
c. das anzuschließende Rohr (10) und die Muffe (11) werden zusammengesteckt, wobei das Rohr (10) bis zum Erreichen seiner bestimmungsgemäßen Position durch den über den Montagehilfskörper (18) aufgeweitet gehaltenen Sicherungsring (12) in die Muffe (11) eindringt, ohne den Sicherungsring zu berühren,
d. der Montagehilfskörper (18) wird vom Sicherungsring (12) abgenommen und vom Rohr (10) entfernt.

3. Verfahren zur Herstellung einer zugfesten Rohrverbindung nach Anspruch 1 oder 2, wobei ein zusätzlicher Hilfsring (28) vorgesehen ist, der die Innenumfangsnut (13) der Muffe (11) teilweise auskleidet, **gekennzeichnet durch** einen den genannten Schritten voraufgehenden Schritt, bei dem zuerst der geschlitzte Hilfsring (28) durchmesserverjüngend gespannt und von der Mündungsseite der Muffe (11) in deren Innenumfangsnut (13) eingesetzt wird.

## Claims

1. Method of manufacturing a traction-safe pipe joint with a split locking ring (12), which is clamped in a diameter-reducing manner and inserted from the mouth side of the bell (11) into the latter's inner circumferential groove (13), characterized by the following steps:
a. the locking ring (12) is expanded in a diameter-increasing manner by means of an expanding tool (26),
b. an assembly aid (18) is placed onto the bell outside end face of the locking ring (12), which is held in an expanded state,
c. the spreading tool (26) is removed and the locking ring (12) is held in an expanded state by the assembly aid (18),
d. the pipe (10) to be connected and the bell (11) are assembled, wherein the pipe (10) up to attainment of its designated position penetrates past the assembly aid (18), through the locking ring (12) held in a expanded state and into the bell (11),
e. the assembly aid (18) is taken off the locking ring (12) and removed from the pipe (10).

2. Method of manufacturing a traction-safe pipe joint with a split locking ring (12), which is clamped in a diameter-reducing manner and inserted from the mouth side of the bell (11) into the latter's inner circumferential groove (13), characterized by the following steps:
a. an assembly aid (18) in the form of an expanding ring is placed onto the bell outside end face of the locking ring (12),
b. the end of the pipe (10) is introduced into the assembly aid (18), wherein the pipe (10) expands the assembly aid (18) and the latter expands the locking ring (12),
c. the pipe (10) to be connected and the bell (11) are assembled, wherein the pipe (10) up to attainment of its designated position penetrates through the locking ring (12) held in a expanded state by the assembly aid (18) and into the bell (11), without touching the locking ring,
d. the assembly aid (18) is taken off the locking ring (12) and removed from the pipe (10).

3. Method of manufacturing a traction-safe pipe joint according to claim 1 or 2, whereby an additional auxiliary ring (28) is provided, which partially lines the inner circumferential groove (13) of the bell (11), characterized by a step, which precedes the described steps and during which first the split auxiliary ring (28) is clamped in a diameter-reducing manner and inserted from the mouth side of the bell (11) into the latter's inner circumferential groove (13).

## Revendications

1. Procédé de fabrication d'une liaison de tube résistant à la traction, avec une bague de sécurité (12) fendue, ou circlip, qui est serré(e), avec rétrécissement du diamètre, et est inséré(e), par le côté embouchure du manchon (11), dans sa gorge périphérique intérieure (13), caractérisé par les étapes suivantes :
a) la bague de sécurité (12) est élargie, avec agrandissement du diamètre, au moyen d'un outil d'écartement (26),
b) un corps d'aide au montage (18) est appliqué sur la face frontale, située côté extérieur du manchon, de la bague de sécurité (12) maintenue élargie,
c) l'outil d'écartement (26) est enlevé et la bague de sécurité (12) est maintenue élargie par le corps d'aide au montage (18),
d) le tube (10) à raccorder et le manchon (11) sont emboîtés, le tube (10) est passé, jusqu'à atteinte de sa position nominale, sur le corps d'aide au montage (18) et pénètre dans le manchon (11) en traversant la bague de sécurité (12) maintenue élargie,
e) le corps d'aide au montage (18) est enlevé de la bague de sécurité (12) et démonté du tube (10).

2. Procédé de fabrication d'une liaison pour tube résistant à la traction, avec une bague de sécurité (12) fendue, qui est serrée, avec diminution du diamètre, et est insérée, depuis le côté embouchure du manchon (11), dans sa gorge périphérique intérieure (13), caractérisé par les étapes suivantes :
a) un corps d'aide au montage (18), se présentant sous la forme d'une bague d'écartement, est appliqué sur la face frontale, située du côté extérieur du manchon, de la bague de sécurité (12),
b) l'extrémité du tube (10) est insérée dans le corps d'aide au montage (18), le tube (10) élargissant le corps d'aide au montage (18) et celui-ci élargissant la bague de sécurité (12),
c) le tube (10) à raccorder et le manchon (11) sont emboîtés, le tube (10) pénètre, jusqu'à atteinte de sa position nominale, à travers la bague de sécurité (12) maintenue élargie sur le corps d'aide au montage (18), dans le manchon (11), sans entrer en contact avec la bague de sécurité,
d) le corps d'aide au montage (18) est enlevé de la bague de sécurité (12) et démonté du tube (10).

3. Procédé de fabrication d'une liaison pour tube résistant à la traction selon la revendication 1 ou 2, une bague auxiliaire (28) supplémentaire étant prévue, qui revêt partiellement la gorge périphérique intérieure (13) du manchon (11), caractérisé par une étape, préalable aux étapes citées, lors de laquelle, d'abord, la bague auxiliaire (28) fendue est serrée, avec diminution du diamètre, et est insérée, depuis le côté embouchure du manchon (11), dans sa gorge périphérique intérieure (13).
